# EUROPEAN PATENT SPECIFICATION

(11) **EP 4 471 689 B1**
(45) Date of publication and mention of the grant of the patent: **01.10.2025**
(21) Application number: 23176341.8
(22) Date of filing: 31.05.2023
(51) Int. Cl.: G06Q 10/0631, A01G 23/00, G06Q 50/02, B60P 1/54, B60P 3/41

(54) **MONITORING HARVESTED LOGS AND PILES OF LOGS AT A WORKSITE**
ÜBERWACHUNG VON GEERNTETEN STÄMMEN UND STÄMMESTAPELN AN EINEM ARBEITSORT
SURVEILLANCE DE RONDINS DE BOIS RÉCOLTÉS ET DE PILES DE RONDINS DE BOIS AU NIVEAU D'UN CHANTIER

(43) Date of publication of application: 04.12.2024
(73) Proprietor: Deere & Company, Moline, IL 61265-8098 (US)
(72) Inventor: PALMROTH, Mikko, 33270 Tampere (FI); KAARNAMETSÄ, Johannes, 33960 Pirkkala (FI)
(74) Representative: Berggren Oy

(56) References cited:
- EP-A1- 3 141 108

## Description

### Technical field

The present invention relates to forest work machines, and, more particularly, to a forwarder adapted to collect and transport logs and to a forest harvester adapted to harvest trees to produce logs. The invention relates to a method of monitoring harvested logs. The invention further relates to an arrangement of monitoring harvested logs.

### Technological Background

In forestry, trees growing in a forest at a worksite are in many cases felled, delimbed and also crosscut to a desired length or into logs with a so-called forest harvester, which is a self-propelled vehicle including a harvester head attached to an articulated boom of the forest harvester. The logs remain on the worksite along a path on a position where they have been ejected by the harvester head during crosscutting and deposited in one or more log piles, which are optionally sorted according to defined properties of the logs, such as species and timber assortment, and are collected subsequently with a so-called forwarder.

The forwarder is a self-propelled vehicle including an articulated boom to a head of which a grapple is attached for grabbing one or more logs at a time and a loading space into which the collected logs are deposited. Once the loading space is sufficiently filled, the forwarder drives to a forest depot which may be adjacent to a logging road and deposits the logs in a single or multiple log piles, in particular sorted according to the defined properties of the logs. The logs are later collected by trucks and transported to a processing plant such as a saw mill or a paper factory.

While harvesting trees with the forest harvester, data indicative of the size of each log that is produced when delimbing and crosscutting a tree stem of a felled tree by the harvester head is sensed and stored. The size of the log is represented by the diameter and the length of the log. Then, under control of the operator of the forest harvester, the logs are deposited in log piles each representing a defined property of the logs such as a specific species, such as pine, spruce, birch, and aspen, and a timber assortment, such as pulpwood, saw timber, and small-diameter saw timber.

The logs in the log piles are collected with the forwarder and deposited in its loading space.

EP 3141108 A1 discloses a method and arrangement for monitoring the collection of plant material, such as logs. The method comprises collecting plant location and attribute data with respect to plant material and providing the data on a collecting vehicle adapted to collect the harvested plant material.

The information related to the size, the species, and/or the timber assortment of the logs in the piles of logs or in specific log piles may be lost during the collecting of the logs by the forwarder when, for example, data indicative of the size of each log that is collected is not sensed. Such data is not easy to sense because the individual logs in a log pile may be covered with snow or plants that prevent identification of the individual logs. Moreover, the logs are loaded into the loading space several logs at a time so that loading takes place quickly and efficiently. Therefore, loading individual logs, one by one for making sure that the sensing operates reliably, and carrying out the sensing of each log individually would take too much time and impair productivity considerably.

However, the sensed data related to the collected logs would be helpful to quantify and monitor transport of the logs at worksites and forest depots and measure productivity and utilization of the forwarder. Based on the sensed data, the properties of the logs in the loading space of the forwarder would be known. Additionally, the sensed data would enable to explore and utilize information and data related to the collected logs in relation to, for example, the logs to be collected in the piles at the worksite.

Thus, there is a need for improved solutions for monitoring the collecting of log piles including harvested logs.

### Brief summary

The method of monitoring harvested logs according to the invention is presented in the independent claim 1.

The arrangement for monitoring harvested logs according to the invention is presented in the independent claim 3.

The dependent claims present further examples of the invention.

### Short description of the drawings

Embodiments of the invention are shown in the drawings, in which:
Fig. 1 shows a schematical side view of a forest harvester in which the invention may be applied,
Fig. 2 shows a schematical side view of a forwarder in which the invention may be applied,
Fig. 3 shows a diagram of control electronics of the forest harvester,
Fig. 4 shows a diagram of control electronics of the forwarder,
Fig. 5 shows a flow diagram indicating the operation of the forest harvester during tree harvesting and applying the invention, and
Fig. 6 shows a flow diagram indicating the operation of the forwarder during log collection and applying the invention.

### Detailed description of the embodiments of the invention

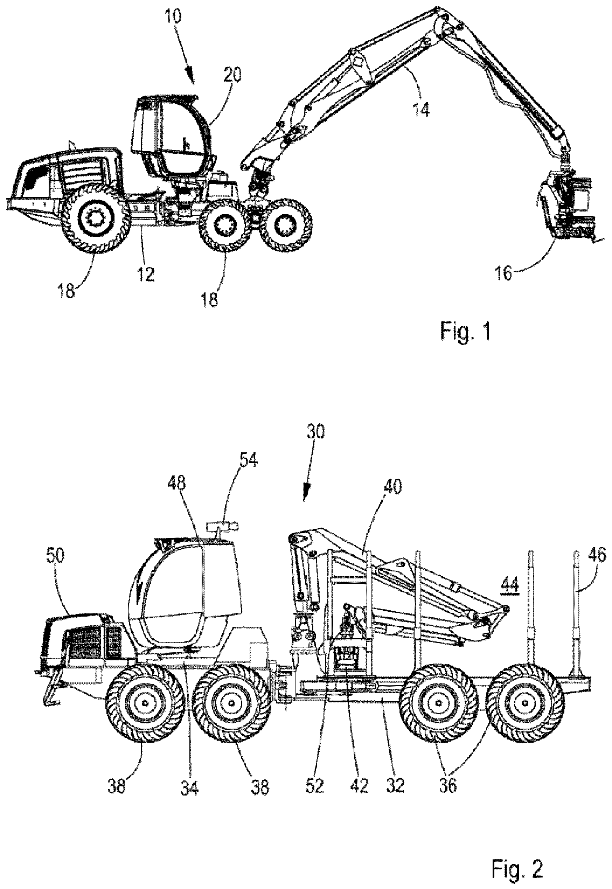

Figure 1 shows an example of a forest work machine that is a forest harvester 10 in which the invention can be applied.

The harvester 10 comprises a frame 12 supported on wheels 18 and which may be articulated. The frame 12 supports an operator station 20, an engine compartment, and an articulated boom 14 with a tree stem processing harvester head 16 attached to its outer end.

During operation of the forest harvester 10, an operator sitting in the operator station 20 drives the forest harvester 10 into a forest and controls the harvester head 16 to grab a tree stem of a standing tree, to crosscut the tree stem off the ground, to lay the tree stem down in a controlled manner, to delimb the tree stem that is being fed through the harvester head 16, and to crosscut the tree stem into logs of desired length that are deposited in a pile on the ground by the harvester head 16.

Under control of the operator, each log is deposited in a log pile representing a defined property of the logs such as a specific species, e.g. pine, spruce, birch, and aspen, and timber assortment, e.g. pulpwood, saw timber, and small-diameter saw timber. These defined properties of the logs constitute harvested material attributes.

The harvester head 16 may include a colour marker 111 that while crosscutting a log marks the log with a colour that represents its species and/or timber assortment. Typically, the crosscut top end of the log is marked with the colour.

Figure 2 shows an example of a forest work machine that is a forwarder 30 in which the invention can be applied.

The forwarder 30 comprises an articulated frame with a rear frame part 32 and a front frame part 34, both supported on wheels 36, 38, respectively. The rear frame part 32 supports an articulated boom 40 having a log handling tool 42, e.g. a timber grapple, attached to its outer end. The boom 40 with the tool 42 is shown in a stowed position in which they are located in a loading space 44 surrounded by posts 46. The front frame part 34 supports an operator station 48 and an engine compartment 50.

During operation of the forwarder 30, an operator sitting in the operator station 48 drives the forwarder 30 sufficiently close to a pile of logs to be collected and controls the boom 40 and the tool 42 to take up one or more logs at a time from the log pile and to deposit them into the loading space 44. Once the loading space 44 is sufficiently filled, the forwarder 30 is driven for transporting the deposited logs to, for example, a forest depot, generally close to a logging road, where it deposits its load constituted by the logs that are finally collected with a truck and brought to a processing plant.

Under control of the operator, logs in several log piles are collected and loaded into the loading space 44 to constitute a load. The load may include logs representing one or more species and timber assortments. The logs representing several species and timber assortments in the load are either mixed or grouped according to their species and timber assortment.

The boom 40 or the loading space 44 may be provided with a scale 52, e.g. between the tool 42 and the boom 40 to weigh the collected logs, e.g. by sensing the weight increments when logs are loaded into the loading space 44.

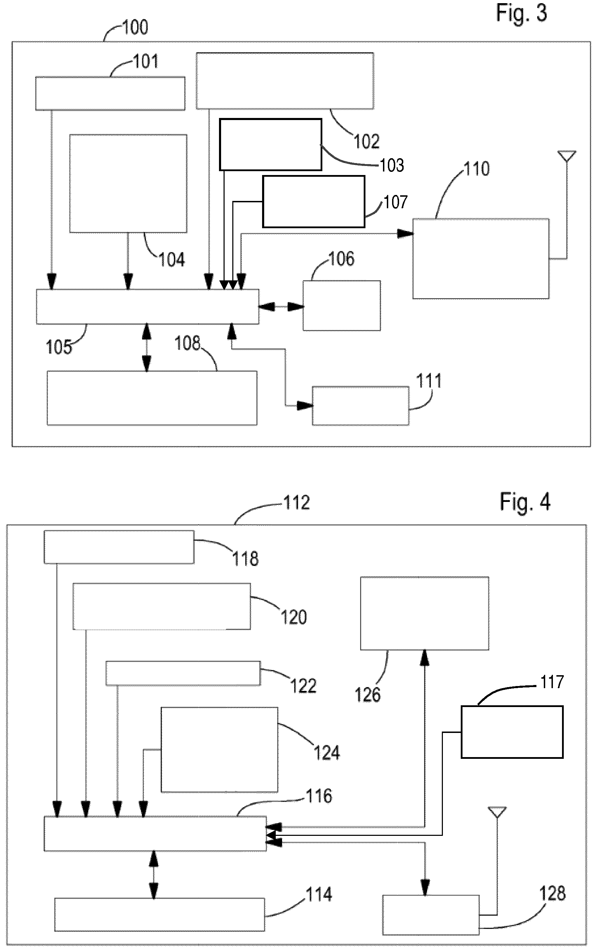

Figure 3 shows a schematical diagram indicating relevant parts of the control electronics 100 of the forest harvester 10. The control electronics 100, constituting an electronic control unit of the forest harvester 10, comprises a data processor 108 that is connected via a data bus 105 to a user interface 101, e.g. an input/output device, an optional location determining receiver 102, adapted to e.g. receive GNSS signals from a global positioning system like GPS, Glonass and/or Galileo, a storage device 106, i.e. a memory device, and one or more sensors 104 for collecting data indicative of one or more harvested material attributes. The control electronics 100 may further comprise one or more sensors 103 for collecting data indicative of position of the boom 14 and/or the harvester head 16, and an optional wireless communications device 110.

The control electronics 100 of the forest harvester 10 applies software elements including algorithms for controlling devices and actuators of the forest harvester 10 when the operator actuates or sets off operations to be carried out by the forest harvester 10 and its tools, e.g. the harvester head 16.

The one or more sensors 104 may include sensors for collecting data indicative of weight and/or size of a log that is being produced when delimbing and crosscutting the tree stem by the harvester head 16. The size of the log is represented by diameter and length of the log.

The control electronics 100 further comprises one or more sensors 107 for collecting data indicative of one or more log pile attributes.

The log pile attributes concern and identify a pile of logs as a whole and thus, for example, relates to a combination of the logs in the log pile. Generally, the log pile has at least two logs but often several logs. For each predetermined or individual log pile, one or more log pile attributes related to the log pile enable or help separating the log pile from other log piles and identify the log pile. The one or more log pile attributes may describe the log pile in a unique way.

Such log pile attributes may concern, for each log pile including logs, species, timber assortment, location, image or visual representation, length, colour markings on the logs, number of the logs, diameter distribution of the logs, angle of the log pile in relation to a path, location of the log pile in relation to a path, angle distribution of angles of the logs in relation to the log pile, and position distribution of positions of the logs.

The log pile attributes sensed and stored may be used for later identification of predetermined or individual log piles into which the forest harvester 10 has deposited logs each having one or more harvested material attributes describing one or more characteristics or quality of the log. The harvested material attributes of the logs in the log pile or in several of the log piles can be collected, combined for analysis, and stored. The harvested material attributes may be used for quantifying, monitoring, and measuring activities at worksites and forest depots.

Figure 4 shows a schematical diagram indicating relevant parts of the control electronics 112 of the forwarder 30. The control electronics 112, constituting an electronic control unit of the forwarder 30, comprises a data processor 114 that is connected via a data bus 116 to a user interface 118, e.g. an input/output device, an optional location determining receiver 120, adapted to e.g. receive GNSS signals from a global positioning system like GPS, Glonass and/or Galileo, a storage device 128, i.e. a memory device, and one or more sensors 124 for collecting data indicative of one or more harvested material attributes. The control electronics 112 may further comprise one or more sensors 122 for collecting data indicative of position of the boom 40 and/or the tool 42, and an optional wireless communications device 126.

The control electronics 112 of the forwarder 30 applies software elements including algorithms for controlling devices and actuators of the forwarder 30 when the operator actuates or sets off operations to be carried out by the forwarder 30 and its tools, e.g. the timber grapple.

The one or more sensors 124 may include sensors for collecting data indicative of weight of logs that are being deposited into the loading space 44 by the tool 42 or while the logs are in the loading space 44, for example a scale 52.

The control electronics 112 further comprises one or more sensors 117 for collecting data indicative of one or more log pile attributes.

The log pile attributes sensed and stored and/or processed, e.g. by the control electronics 112, are used to identify predetermined or individual log piles into which the forest harvester 10 has deposited logs each having one or more harvested material attributes describing one or more characteristics or quality of the log. For identification, the log pile attributes collected by the forwarder 30 are compared with the log pile attributes collected by the forest harvester 10. The log piles are individually identified and the harvested material attributes of the logs in the log pile or in several of the log piles that are deposited in the loading space 44 of the forwarder 30 may be collected, combined for analysis, and stored and/or processed.

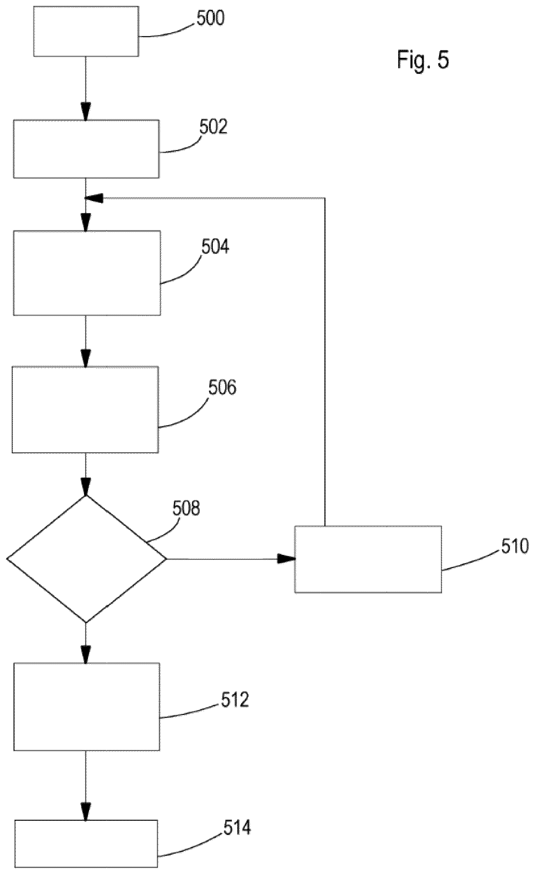

Figure 5 shows an example of a flow diagram regarding the operation of the forest harvester 10 during tree harvesting. After start in step 500, the forest harvester 10 is driven by its operator to a worksite in a forest (step 502). In step 504, a tree is felled, and its tree stem is delimbed and crosscut into logs of desired size, and the logs are deposited in one or more log piles according to one or more harvested material attributes belonging to each log. The step 504 may include marking the logs with a colour.

In step 506, the location of each log, and/or the location of the one or more log piles, and/or the location of the forest harvester 10 is stored and/or processed by the control electronics 100, based on the location determined by the location-determining receiver 102 and/or based on data indicative of the position of the boom 14 and/or the harvester head 16. The location of the forest harvester 10 may represent the location of one or more of the log piles with a reasonable accuracy.

Additionally in step 504, the one or more harvested material attributes (e.g. size) sensed by the one or more sensors 104 and/or entered via the user interface 101 (e.g. species, timber assortment) are stored and or processed by the control electronics 100.

Such harvested material attributes may concern, for each log in a log pile or in a group of log piles, size (i.e. diameter and/or length of the log), weight, species, timber assortment, location, and/or the number of logs in the log pile(s).

The harvested material attributes sensed and stored and/or processed may be helpful to quantify and monitor transport of timber at worksites and forest depots and measure productivity and utilization of the forest harvester 10 and the forwarder 30.

In step 506, the one or more log pile attributes of the one or more of the log piles are detected by the one or more sensors 107, which are adapted to collect data indicative of one or more of the log pile attributes. Such a sensor can be a camera, a stereo camera, a laser scanner, a laser scanning device for laser imaging, detection, and ranging (e.g. LIDAR), and/or an image processing system. Additionally, one or more of the log pile attributes sensed by the one or more sensors 107 and/or entered via the user interface 101, and/or sensed by the location determining receiver 102, are stored and/or processed by the control electronics 100. The stored one or more log pile attributes may constitute an inventory of log piles which may also be updated. The inventory may include the harvested data attributes related to the log piles.

After step 506, step 508 follows for checking whether all trees to be felled in the worksite or at the location of the forest harvester 10 have been felled and the log piles are completed. If this is not the case, the forest harvester 10 drives, if necessary, to the next tree, and step 504 follows again. Otherwise, step 512 may be executed, in which data including the log pile attributes that are collected is sent, via the wireless communications device 110, to the wireless communications device 126 on the forwarder 30 and stored and/or processed by the control electronics 112 of the forwarder 30. The data may include the harvested material attributes. Step 508 may include prompting the operator via the user interface 101 to input the above status of the worksite.

Additionally or alternatively, in step 512, the data and/or the inventory is sent or transmitted from the forest harvester 10 to a remote location, e.g. a computer server, from which the data and/or the inventory may be sent or transmitted to the forwarder 30. Finally, the data and/or the inventory harvester 10 may drive to a home base or another worksite (step 514).

Alternatively or additionally, the data and/or the inventory may be written into a movable storage device, like a memory card or stick, and physically transferred to the forwarder 30 and/or the remote location.

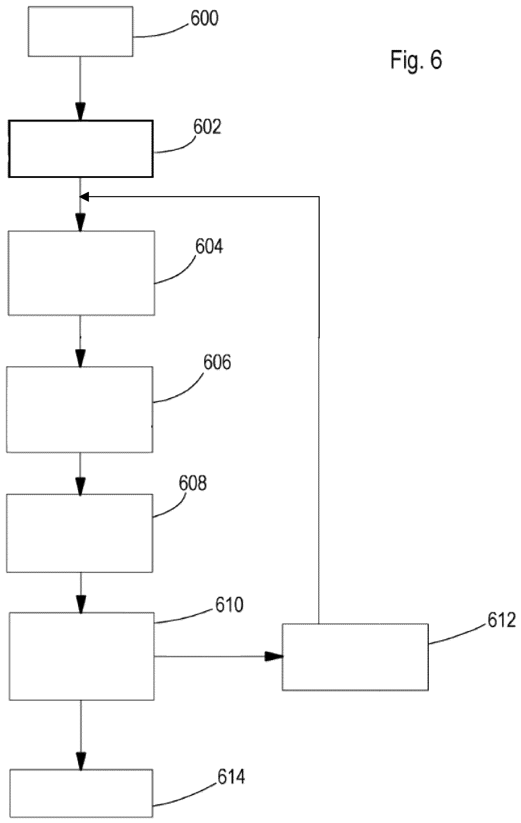

Figure 6 shows an example of a flow diagram indicating the operation of the forwarder 30 when collecting the logs in the one or more log piles that have been produced during the tree harvesting according to the diagram of Figure 5 and/or carried out by the forest harvester 10. After start in step 600, optionally a work plan for the forwarder 30 is generated and subsequently displayed to the operator via the user interface 118. The work plan may include target locations for the forwarder 30.

In the following step 602, the forwarder 30 is driven to the worksite where the logs in the one or more log piles according to Figure 5 are lying on the ground and the forwarder 30 is positioned at a location relating to one or more of the log piles.

In step 604, one or more log pile attributes of the one or more piles are detected by the one or more sensors 117 of the forwarder 30, which are adapted to collect data indicative of the one or more log pile attributes. This is carried out independently of the above detection carried out by the forest harvester 10. Such a sensor can be a camera, a stereo camera, a laser scanner, a laser scanning device for laser imaging, detection, and ranging (e.g. LIDAR), and/or an image processing system. Additionally, one or more of the log pile attributes sensed by the one or more sensors 117 and/or entered via the user interface 118, and/or sensed by the location determining receiver 120, are stored and/or processed by the control electronics 112 of the forwarder 30.

In the next step 606, the sensed log pile attributes are compared with the collected log pile attributes that have been received in step 512. Additionally or alternatively, the data, i.e. the sensed log pile attributes, is sent or transmitted from the forwarder 30 to the remote location for analysis and carrying out the comparing, e.g. in a computer server.

The control electronics 112 of the forwarder or computer equipment including the computer server at the remote location may act as a comparison device adapted to compare the sensed log pile attributes (step 604) with the collected log pile attributes (step 506) in, for example, in the inventory, and to generate an output dependent on the result of the comparison. The output may be sent or transmitted to the forwarder 30 from the remote location. The output may be shown on the user interface 118, e.g. to the operator.

The comparison in step 606 may check for identity of the sensed log pile attributes collected by the forwarder 30 or check for similarity of the collected log pile attributes, e.g. in the inventory, and the sensed log pile attributes within a predetermined tolerance frame. For example, all log pile attributes of all produced log piles at the worksite can be stored in step 506 and compared in step 606 with the help of, for example, a list or table from which each produced log pile that is identified is subsequently cancelled. Alternatively, the produced log piles are marked or chosen for later analysis. Such a list or table may constitute the inventory which is automatically updated during the tree harvesting and may be used, for example, for data management and further analysis.

When the log pile attributes match in step 606, step 608 may follow.

In step 608, the articulated boom 40 and the tool 42 are operated to take up one or more logs at one time from the sensed one or more log piles on the ground, whereby the boom 40 and the tool 42 are controlled manually by the operator or partly or fully automatically by the control electronics 112, for example using the one or more sensors 122. The collected logs in the sensed one or more log piles are deposited in the loading space 44.

In step 610, e.g. during step 608, one or more of the harvested material attributes of the logs taken up may be detected by the one or more sensors 124. Such a sensor 124 may be the scale 52 detecting the weight of the logs.

When the log pile attributes match, step 612 follows, in which the forwarder 30 is moved to the next location relating to one or more of the log piles that were produced and sensed by the forest harvester 10, followed again by step 606. The successful comparison may also be indicated on the user interface 118.

On the other hand, if step 606 reveals that no successful comparison is possible, step 614 may follow, in which an error message may given to the operator on the user interface 118, and/or sent to the remote location so that further actions may follow and/or instructions are sent to the operator from the remote location. The operator can then take appropriate measures. Once the situation has been cleared, step 608 or step 612 can follow.

At the end of the collecting operation, the information or data on the collected one or more log piles and/or the logs in them may be submitted to the remote location by means of the wireless communications device 126.

## Claims

1. A method of monitoring harvested logs, the method comprising the steps of:
- applying a forest work machine in the form of a forest harvester (10) adapted to harvest trees to produce logs that are deposited in log piles by the forest harvester, the forest harvester including control electronics (100) and one or more sensors (107) adapted to sense one or more log pile attributes that concern and identify a pile of logs as a whole, each log pile attribute representing a property of the log pile, and the log pile including at least two logs;
- driving the forest harvester to locations in a worksite, each location relating to one or more log piles to be produced, each log pile including logs representing a species and a timber assortment;
- harvesting trees and producing logs that are deposited in the one or more log piles;
- sensing, during the harvesting step and with the help of one or more sensors (104), one or more harvested material attributes that describe one or more characteristics or quality of each produced log included in each log pile, and
- **(i)** storing and/or processing, after the sensing step, the sensed one or more harvested material attributes in the forest harvester and/or **(ii)** sending, after the sensing step, the sensed one or more harvested material attributes to a remote location and/or **(iii)** sending, after the sensing step, the sensed one or more harvested material attributes to one or more forwarders adapted to collect and transport logs,
**characterised by** the steps of:
- sensing, after the harvesting step, for each log pile and with the help of the one or more sensors, one or more log pile attributes that concern and identify the log pile; and
- **(i)** storing and/or processing, after the sensing step, the sensed one or more log pile attributes in the forest harvester and/or **(ii)** sending, after the sensing step, the sensed one or more log pile attributes to a remote location and/or **(iii)** sending, after the sensing step, the sensed one or more log pile attributes to one or more forwarders adapted to collect and transport logs.

2. The method according to claim 1, wherein the method further comprises:
- storing and/or processing an inventory in the forest harvester, the inventory including individual log piles and one or more log pile attributes that concern and identify the individual log piles stored in the inventory; and
- supplementing, for each log pile in the inventory, the one or more log pile attributes with the one or more harvested material attributes of the logs included in the log pile.

3. An arrangement for monitoring harvested logs, comprising:
- a forest work machine in the form of a forwarder (30) adapted to collect and transport logs, the forwarder including
- control electronics (112) and one or more sensors (122) adapted to sense one or more log pile attributes that concern and identify a pile of logs as a whole, each log pile attribute representing a property of the log pile, and the log pile including at least two logs;
- wherein, in the forwarder (30), the control electronics (112) is adapted to **(i)** store and/or process the sensed one or more log pile attributes in the forwarder and/or **(ii)** send the sensed one or more log pile attributes to a remote location,
the arrangement further comprising:
- a forest work machine in the form of a forest harvester (10) adapted to harvest trees to produce the logs that are deposited in the log piles by the forest harvester, the forest harvester including control electronics (100) and one or more sensors (107) adapted to:
- sense, during the harvesting with the help of one or more sensors (104) of the forest harvester, one or more harvested material attributes that describe one or more characteristics or quality of each produced log included in each log pile, and
- **(i)** store and/or process the one or more harvested material attributes, as sensed by the forest harvester, and/or **(ii)** send the sensed one or more harvested material attributes to a remote location and/or **(iii)** send the sensed one or more harvested material attributes to the forwarder, and
**characterised in that** the control electronics (100) and one or more sensors (107) of the forest harvester (10) are further adapted to sense:
- one or more log pile attributes that concern and identify a pile of logs as a whole, each log pile attribute representing a property of the log pile, and the log pile including at least two logs;
- wherein, in the forest harvester (10), the control electronics (100) is adapted to **(i)** store and/or process the sensed one or more log pile attributes in the forest harvester and/or **(ii)** send the sensed one or more log pile attributes to a remote location and/or **(iii)** send the sensed one or more log pile attributes to the forwarder.

4. The arrangement according to claim 3, wherein the control electronics (112) of the forwarder (30) is adapted to:
- store an inventory including individual log piles and one or more log pile attributes that concern and identify the individual log piles stored in the inventory;
- compare the one or more log pile attributes of the log pile, as sensed by the forwarder (30), with the one or more log pile attributes in the inventory;
- identify the log pile stored in the inventory that matches the one or more log pile attributes of the log pile, as sensed by the forwarder (30); and
- generate an output dependent on the result of the comparing or the identifying.

5. The arrangement according to claim 3 or 4, wherein the control electronics (112) of the forwarder (30) is adapted to:
- store and/or process one or more harvested material attributes that describe one or more characteristics or quality of each produced log included in the log pile;
- combine, for each log pile, the one or more log pile attributes with the one or more harvested material attributes of the logs included in the log pile; and
- generate an output dependent on the result of the combining.

## Patentansprüche

1. Verfahren zum Überwachen von geernteten Baumstämmen, wobei das Verfahren die folgenden Schritte umfasst:
- Anwenden einer forstwirtschaftlichen Arbeitsmaschine in Form eines forstwirtschaftlichen Erntefahrzeugs (10), das dazu ausgelegt ist, Bäume zu ernten, um Baumstämme zu erzeugen, die durch das forstwirtschaftliche Erntefahrzeug in Baumstammstapeln abgelegt werden, wobei das forstwirtschaftliche Erntefahrzeug eine Steuerelektronik (100) und einen oder mehrere Sensoren (107) umfasst, die dazu ausgelegt sind, ein oder mehrere Baumstammstapelattribute zu erfassen, die einen Stapel aus Baumstämmen als Ganzes betreffen und identifizieren, wobei jedes Baumstammstapelattribut eine Eigenschaft des Baumstammstapels darstellt und der Baumstammstapel mindestens zwei Baumstämme umfasst;
- Fahren des forstwirtschaftlichen Erntefahrzeugs zu Orten in einer Arbeitsstätte, wobei sich jeder Ort auf einen oder mehrere zu erzeugende Baumstammstapel bezieht, wobei jeder Baumstammstapel Baumstämme umfasst, die eine Art und ein Holzsortiment darstellen;
- Ernten von Bäumen und Erzeugen von Baumstämmen, die in dem einen oder den mehreren Baumstammstapeln abgelegt werden;
- Erfassen, während des Ernteschritts und mit der Hilfe eines oder mehrerer Sensoren (104), eines oder mehrerer Erntematerialattribute, die eine oder mehrere Charakteristiken oder eine Qualität jedes erzeugten Baumstamms beschreiben, der in jedem Baumstammstapel enthalten ist, und
- (i) Speichern und/oder Verarbeiten, nach dem Erfassungsschritt, des einen oder der mehreren erfassten Erntematerialattribute in dem forstwirtschaftlichen Erntefahrzeug und/oder (ii) Senden, nach dem Erfassungsschritt, des einen oder der mehreren erfassten Erntematerialattribute an einen entfernten Ort und/oder (iii) Senden, nach dem Erfassungsschritt, des einen oder der mehreren erfassten Erntematerialattribute an einen oder mehrere Rückezüge, die dazu ausgelegt sind, Baumstämme zu sammeln und zu transportieren, **gekennzeichnet durch** die folgenden Schritte:
- Erfassen, nach dem Ernteschritt, für jeden Baumstammstapel und mit der Hilfe des einen oder der mehreren Sensoren, eines oder mehrerer Baumstammstapelattribute, die den Baumstammstapel betreffen und identifizieren; und
- (i) Speichern und/oder Verarbeiten, nach dem Erfassungsschritt, des einen oder der mehreren erfassten Baumstammstapelattribute in dem forstwirtschaftlichen Erntefahrzeug und/oder (ii) Senden, nach dem Erfassungsschritt, des einen oder der mehreren erfassten Baumstammstapelattribute an einen entfernten Ort und/oder (iii) Senden, nach dem Erfassungsschritt, des einen oder der mehreren erfassten Baumstammstapelattribute an einen oder mehrere Rückezüge, die dazu ausgelegt sind, Baumstämme zu sammeln und zu transportieren.

2. Verfahren nach Anspruch 1, wobei das Verfahren ferner Folgendes umfasst:
- Speichern und/oder Verarbeiten eines Bestandsverzeichnisses in dem forstwirtschaftlichen Erntefahrzeug, wobei das Bestandsverzeichnis einzelne Baumstammstapel und ein oder mehrere Baumstammstapelattribute umfasst, die die einzelnen in dem Bestandsverzeichnis gespeicherten Baumstammstapel betreffen und identifizieren; und
- Ergänzen, für jeden Baumstammstapel in dem Bestandsverzeichnis, des einen oder der mehreren Baumstammstapelattribute mit dem einen oder den mehreren Erntematerialattributen der Baumstämme, die in dem Baumstammstapel enthalten sind.

3. Anordnung zum Überwachen geernteter Baumstämme, die Folgendes umfasst:
- eine forstwirtschaftliche Arbeitsmaschine in Form eines Rückezugs (30), der dazu ausgelegt ist, Baumstämme zu sammeln und zu transportieren, wobei der Rückezug Folgendes umfasst
- eine Steuerelektronik (112) und einen oder mehrere Sensoren (122), die dazu ausgelegt sind, einen oder mehrere Baumstammstapelattribute zu erfassen, die einen Stapel aus Baumstämmen als Ganzes betreffen und identifizieren, wobei jedes Baumstammstapelattribut eine Eigenschaft des Baumstammstapels darstellt und der Baumstammstapel mindestens zwei Baumstämme umfasst;
- wobei, in dem Rückezug (30), die Steuerelektronik (112) ausgelegt ist zum (i) Speichern und/oder Verarbeiten des einen oder der mehreren erfassten Baumstammstapelattribute in dem Rückezug und/oder (ii) Senden des einen oder der mehreren erfassten Baumstammstapelattribute an einen entfernten Ort,
wobei die Anordnung ferner Folgendes umfasst:
- eine forstwirtschaftlichen Arbeitsmaschine in Form eines forstwirtschaftlichen Erntefahrzeugs (10), das dazu ausgelegt ist, Bäume zu ernten, um die Baumstämme zu erzeugen, die durch das forstwirtschaftliche Erntefahrzeug in den Baumstammstapeln abgelegt werden, wobei das forstwirtschaftliche Erntefahrzeug eine Steuerelektronik (100) und einen oder mehrere Sensoren (107) umfasst, die zu Folgendem ausgelegt sind:
- Erfassen, während der Ernte mit der Hilfe eines oder mehrerer Sensoren (104) des forstwirtschaftlichen Erntefahrzeugs, eines oder mehrerer Erntematerialattribute, die eine oder mehrere Charakteristiken oder eine Qualität jedes erzeugten Baumstamms beschreiben, der in jedem Baumstammstapel enthalten ist, und
- (i) Speichern und/oder Verarbeiten des einen oder der mehreren Erntematerialattribute, wie durch das forstwirtschaftliche Erntefahrzeug erfasst, und/oder (ii) Senden des einen oder der mehreren erfassten Erntematerialattribute an einen entfernten Ort und/oder (iii) Senden des einen oder der mehreren erfassten Erntematerialattribute an den Rückezug, und
**dadurch gekennzeichnet, dass** die Steuerelektronik (100) und ein oder mehrere Sensoren (107) des forstwirtschaftlichen Erntefahrzeugs (10) ferner dazu ausgelegt sind, Folgendes zu erfassen:
- ein oder mehrere Baumstammstapelattribute, die einen Stapel aus Baumstämmen als Ganzes betreffen und identifizieren, wobei jedes Baumstammstapelattribut eine Eigenschaft des Baumstammstapels darstellt und der Baumstammstapel mindestens zwei Baumstämme umfasst;
- wobei, in dem forstwirtschaftlichen Erntefahrzeug (10), die Steuerelektronik (100) ausgelegt ist zum (i) Speichern und/oder Verarbeiten des einen oder der mehreren erfassten Baumstammstapelattribute in dem forstwirtschaftlichen Erntefahrzeug und/oder (ii) Senden des einen oder der mehreren erfassten Baumstammstapelattribute an einen entfernten Ort und/oder (iii) Senden des einen oder der mehreren erfassten Baumstammstapelattribute an den Rückezug.

4. Anordnung nach Anspruch 3, wobei die Steuerelektronik (112) des Rückezugs (30) zu Folgendem ausgelegt ist:
- Speichern eines Bestandsverzeichnisses, das einzelne Baumstammstapel und ein oder mehrere Baumstammstapelattribute umfasst, die die einzelnen in dem Bestandsverzeichnis gespeicherten Baumstammstapel betreffen und identifizieren;
- Vergleichen des einen oder der mehreren Baumstammstapelattribute des Baumstammstapels, wie durch den Rückezug (30) erfasst, mit dem einen oder den mehreren Baumstammstapelattributen in dem Bestandsverzeichnis;
- Identifizieren des in dem Bestandsverzeichnis gespeicherten Baumstammstapels, der mit dem einen oder den mehreren Baumstammstapelattributen des Baumstammstapels, wie durch den Rückzug (30) erfasst, übereinstimmt; und
- Generieren einer Ausgabe in Abhängigkeit von dem Ergebnis des Vergleichs oder der Identifizierung.

5. Anordnung nach Anspruch 3 oder 4, wobei die Steuerelektronik (112) des Rückezugs (30) zu Folgendem ausgelegt ist:
- Speichern und/oder Verarbeiten eines oder mehrerer Erntematerialattribute, die eine oder mehrere Charakteristiken oder eine Qualität jedes erzeugten Baumstamms beschreiben, der in dem Baumstammstapel enthalten ist;
- Kombinieren, für jeden Baumstammstapel, des einen oder der mehreren Baumstammstapelattribute mit dem einen oder den mehreren Erntematerialattributen der Baumstämme, die in dem Baumstammstapel enthalten sind; und
- Generieren einer Ausgabe in Abhängigkeit von dem Ergebnis des Kombinierens.

## Revendications

1. Procédé de surveillance de grumes abattues, le procédé comprenant les étapes suivantes :
- l'application d'un engin de travail forestier sous la forme d'une abatteuse forestière (10) adaptée pour abattre des arbres pour produire des grumes qui sont déposées en des piles de grumes par l'abatteuse forestière, l'abatteuse forestière incluant des composants électroniques de commande (100) et un ou plusieurs capteurs (107) adaptés pour détecter un ou plusieurs attributs de pile de grumes qui concernent et identifient une pile de grumes dans son ensemble, chaque attribut de pile de grumes représentant une propriété de la pile de grumes, et la pile de grumes incluant au moins deux grumes ;
- la conduite de l'abatteuse forestière jusqu'à des emplacements dans un chantier de travail, chaque emplacement étant connexe à une ou à plusieurs piles de grumes devant être produites, chaque pile de grumes incluant des grumes représentant une espèce et un assortiment de bois ;
- l'abattage d'arbres et la production de grumes qui sont déposées dans l'une ou les plusieurs piles de grumes ;
- la détection, durant l'étape de l'abattage et à l'aide d'un ou de plusieurs capteurs (104), d'un ou plusieurs attributs de matière abattue qui décrivent une ou plusieurs caractéristiques ou une qualité de chaque grume produite incluse dans chaque pile de grumes, et
- (i) le stockage et/ou le traitement, après l'étape de la détection, de l'un ou des plusieurs attributs détectés de matière abattue dans l'abatteuse forestière et/ou (ii) l'envoi, après l'étape de la détection, de l'un ou des plusieurs attributs détectés de matière abattue à un emplacement à distance et/ou (iii) l'envoi, après l'étape de la détection, de l'un ou des plusieurs attributs détectés de matière abattue à un ou à plusieurs porteurs adaptés pour collecter et transporter des grumes,
**caractérisé par** les étapes suivantes :
- la détection, après l'étape de l'abattage, pour chaque pile de grumes et à l'aide de l'une ou des plusieurs capteurs, d'un ou de plusieurs attributs de pile de grumes qui concernent et identifient la pile de grumes ; et
- (i) le stockage et/ou le traitement, après l'étape de la détection, de l'un ou des plusieurs attributs détectés de pile de grumes dans l'abatteuse forestière et/ou (ii) l'envoi, après l'étape de la détection, de l'un ou des plusieurs attributs détectés de pile de grumes à un emplacement à distance et/ou (iii) l'envoi, après l'étape de la détection, de l'un ou des plusieurs attributs détectés de pile de grumes à un ou à plusieurs porteurs adaptés pour collecter et transporter des grumes.

2. Procédé selon la revendication 1, dans lequel le procédé comprend en outre :
- le stockage et/ou le traitement d'un stock dans l'abatteuse forestière, le stock incluant des piles individuelles de grumes et un ou plusieurs attributs de pile de grumes qui concernent et identifient les piles individuelles de grumes stockées dans le stock ; et
- l'addition, pour chaque pile de grumes dans le stock, à l'un ou aux plusieurs attributs de pile de grumes, de l'un ou des plusieurs attributs de matière abattue des grumes incluses dans la pile de grumes.

3. Agencement pour surveillance de grumes abattues, comprenant :
- un engin de travail forestier sous la forme d'un porteur (30) adapté pour collecter et transporter des grumes, le porteur incluant
- des composants électroniques de commande (112) et un ou plusieurs capteurs (122) adaptés pour détecter un ou plusieurs attributs de pile de grumes qui concernent et identifient une pile de grumes dans son ensemble, chaque attribut de pile de grumes représentant une propriété de la pile de grumes, et la pile de grumes incluant au moins deux grumes ;
- dans lequel, dans le porteur (30), les composants électroniques de commande (112) sont adaptés pour (i) stocker et/ou traiter l'un ou les plusieurs attributs détectés de pile de grumes dans le porteur et/ou (ii) envoyer l'un ou les plusieurs attributs détectés de pile de grumes à un emplacement à distance, l'agencement comprenant en outre :
- un engin de travail forestier sous la forme d'une abatteuse forestière (10) adaptée pour abattre des arbres pour produire les grumes qui sont déposées dans la piles de grumes par l'abatteuse forestière, l'abatteuse forestière incluant des composants électroniques de commande (100) et un ou plusieurs capteurs (107) adaptés pour :
- détecter, durant l'abattage, à l'aide d'un ou de plusieurs capteurs (104) de l'abatteuse forestière, un ou plusieurs attributs de matière abattue qui décrivent une ou plusieurs caractéristiques ou une qualité de chaque grume produite incluse dans chaque pile de grumes, et
- (i) stocker et/ou traiter l'un ou les plusieurs attributs de matière abattue, tels que détectés par l'abatteuse forestière, et/ou (ii) envoyer l'un ou les plusieurs attributs détectés de matière abattue à un emplacement à distance et/ou (iii) envoyer l'un ou les plusieurs attributs détectés de matière abattue au porteur, et
**caractérisé en ce que** les composants électroniques de commande (100) et l'un ou les plusieurs capteurs (107) de l'abatteuse forestière (10) sont en outre adaptés pour détecter :
- un ou plusieurs attributs de pile de grumes qui concernent et identifient une pile de grumes dans son ensemble, chaque attribut de pile de grumes représentant une propriété de la pile de grumes, et la pile de grumes incluant au moins deux grumes ;
- dans lequel, dans l'abatteuse forestière (10), les composants électroniques de commande (100) sont adaptés pour (i) stocker et/ou traiter l'un ou les plusieurs attributs détectés de pile de grumes dans l'abatteuse forestière et/ou (ii) envoyer l'un ou les plusieurs attributs détectés de pile de grumes à un emplacement à distance et/ou (iii) envoyer l'un ou les plusieurs attributs détectés de pile de grumes au porteur.

4. Agencement selon la revendication 3, dans lequel les composants électroniques de commande (112) du porteur (30) sont adaptés pour :
- stocker un stock incluant des piles individuelles de grumes et un ou plusieurs attributs de pile de grumes qui concernent et identifient les piles individuelles de grumes stockées dans le stock ;
- comparer l'un ou les plusieurs attributs de pile de grumes de la pile de grumes, tels que détectés par le porteur (30), à l'un ou aux plusieurs attributs de pile de grumes dans le stock ;
- identifier la pile de grumes stockée dans le stock qui correspond à l'un ou aux plusieurs attributs de pile de grumes de la pile de grumes, tels que détectés par le porteur (30) ; et
- générer une sortie en fonction du résultat de la comparaison ou de l'identification.

5. Agencement selon la revendication 3 ou 4, dans lequel les composants électroniques de commande (112) du porteur (30) sont adaptés pour :
- stocker et/ou traiter un ou plusieurs attributs de matière abattue qui décrivent une ou plusieurs caractéristiques ou une qualité de chaque grume produite incluse dans la pile de grumes ;
- combiner, pour chaque pile de grumes, l'un ou les plusieurs attributs de pile de grumes avec l'un ou les plusieurs attributs de matière abattue des grumes incluses dans la pile de grumes ; et
- générer une sortie en fonction du résultat de la combinaison.
